(19) Europäisches Patentamt European Patent Office Office européen des brevets

(11) **EP 4 502 066 A1**

(12) **EUROPEAN PATENT APPLICATION**
published in accordance with Art. 153(4) EPC

(43) Date of publication:
05.02.2025 Bulletin 2025/06

(21) Application number: 23775084.9

(22) Date of filing: 24.03.2023

(51) International Patent Classification (IPC):
*C08L 77/00* (2006.01)      *C08K 3/011* (2018.01)
*C08K 3/105* (2018.01)      *C08L 23/00* (2006.01)
*C08L 25/04* (2006.01)      *C08L 51/06* (2006.01)

(52) Cooperative Patent Classification (CPC):
C08K 3/011; C08K 3/105; C08L 23/00; C08L 25/04;
C08L 51/06; C08L 77/00

(86) International application number:
PCT/JP2023/011800

(87) International publication number:
WO 2023/182491 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2022  JP 2022048923
31.05.2022  JP 2022088612
18.10.2022  JP 2022167193

(71) Applicant: Asahi Kasei Kabushiki Kaisha
Tokyo 1000006 (JP)

(72) Inventor: OSHIMA Taichi
Tokyo 100-0006 (JP)

(74) Representative: Hoffmann Eitle
Patent- und Rechtsanwälte PartmbB
Arabellastraße 30
81925 München (DE)

(54) **POLYAMIDE RESIN COMPOSITION**

(57) This polyamide resin composition comprises a polyamide resin (A), a polyolefin-based graft copolymer (B) having an aromatic-ring-containing polymer as a side chain, and a compatibilizing agent (C).

## Description

Technical Field

The present invention relates to a polyamide resin composition.

The present invention claims priority on the basis of Japanese Patent Application No. 2022-048923 filed in Japan on March 24, 2022, Japanese Patent Application No. 2022-088612 filed in Japan on May 31, 2022, and Japanese Patent Application No. 2022-167193 filed in Japan on October 18, 2022, the contents of which are incorporated herein by reference.

Background Art

Polyamide resins have excellent sliding properties, moldability, mechanical properties, chemical resistance, and the like. Polyamide resins have been widely used as component materials of industrial materials, automobile materials, electrical and electronic materials, or as industrial materials themselves.

In recent years, the substitution of metal parts with resin parts has progressed in automobile fields, electrical and electronic fields, or the like. Molding materials having excellent sliding properties and mechanical properties such as toughness and impact resistance are required from the viewpoints of weight reduction to improve fuel efficiency, cost reduction, and improving the efficiency of assembly processes.

Blending and kneading of a solid lubricant such as fluororesin, graphite, or molybdenum disulfide with a polyamide resin are known techniques to further improve the sliding properties of the polyamide resin.

Polyamide resin compositions in which a fluororesin is blended with a polyamide resin to improve sliding properties are disclosed in Patent Documents 2 to 4. Furthermore, a slide member of a power transmission guide obtained by dispersing a polyolefin-based resin in a polyamide resin is disclosed in Patent Document 1.

Citation List

Patent Documents

Patent Document 1: Japanese Unexamined Patent Application, First Publication No. 2016-117842
Patent Document 2: International Patent Publication No. WO 2013/047625
Patent Document 3: Japanese Unexamined Patent Application, First Publication No. 2011-84679
Patent Document 4: Japanese Unexamined Patent Application, First Publication No. 2012-102189

Summary of Invention

Technical Problem

It has been proposed to blend a fluororesin into a polyamide resin as a technique to improve sliding properties. Examples of the fluororesin to be blended include polytetrafluoroethylene. However, when polytetrafluoroethylene is used, it is necessary to melt-knead polytetrafluoroethylene under high shear conditions at a temperature equal to or higher than the melting point of polytetrafluoroethylene in order to finely disperse polytetrafluoroethylene. As a result of melt-kneading, there is a problem in which the polyamide resin deteriorates and the mechanical strength thereof decreases.

Furthermore, it has been proposed to blend a polyolefin-based resin into a polyamide resin, as a technique to improve sliding properties. However, the melt viscosity of the polyamide resin differs from that of the polyolefin-based resins. Furthermore, the melt viscosity of the polyamide resin significantly differs from that of the polyolefin-based resin depending on the shear rate applied during production. As a result of the significant difference in the melt viscosity between the polyamide resin and the polyolefin-based resin, the morphological state of the polyolefin-based resin differs greatly, thereby greatly affecting mechanical properties and sliding properties, which is a problem.

The present invention was made in view of the above-mentioned circumstances, and aims to provide a polyamide resin composition that has excellent sliding properties and mechanical properties, as well as stable sliding properties that are independent of the shear rate in an injection molding step during production.

Solution to Problem

The present invention encompasses the following aspects.

(1) A polyamide resin composition, containing: a polyamide resin (A); a polyolefin-based graft copolymer (B) having an aromatic-ring-containing polymer in a side chain; and a compatibilizing agent (C).

(2) The polyamide resin composition according to (1) mentioned above, wherein the compatibilizing agent (C) contains at least one selected from the group consisting of an olefin skeleton and an aromatic ring skeleton.

(3) The polyamide resin composition according to (1) or (2) mentioned above, wherein the amount of the polyolefin-based graft copolymer (B) having an aromatic-ring-containing polymer in a side chain is 1 part by mass to 15 parts by mass, and the amount of the compatibilizing agent (C) is 0.2 parts by mass to 10 parts by mass, relative to 100 parts by mass of the polyamide resin (A).

(4) The polyamide resin composition according to any one of (1) to (3) mentioned above, wherein the compatibilizing agent (C) contains at least the olefin skeleton.

(5) The polyamide resin composition according to (4) mentioned above, wherein the mass ratio ((C)/(B)) of the compatibilizing agent (C) to the polyolefin-based graft copolymer (B) having an aromatic-ring-containing polymer in a side chain is 0.01 to 2.

(6) The polyamide resin composition according to any one of (1) to (3) mentioned above, wherein the compatibilizing agent (C) contains at least the aromatic ring skeleton.

(7) The polyamide resin composition according to (6) mentioned above, wherein the mass ratio ((C)/(B)) of the compatibilizing agent (C) to the polyolefin-based graft copolymer (B) having an aromatic-ring-containing polymer in a side chain is 0.001 to 1.

(8) The polyamide resin composition according to (6) or (7) mentioned above, wherein the compatibilizing agent (C) has at least a functional group reactive with the polyamide resin (A).

(9) The polyamide resin composition according to (8) mentioned above, wherein the reactive functional group contains a structural unit derived from a carboxylic anhydride.

(10) The polyamide resin composition according to any one of (1) to (9) mentioned above, wherein the compatibilizing agent (C) has an amide bond at least in a side chain

(11) The polyamide resin composition according to any one of (1) to (10) mentioned above, wherein the polyolefin-based graft copolymer (B) having an aromatic-ring-containing polymer in a side chain contains a polyethylene at least in the main chain.

(12) The polyamide resin composition according to any one of (1) to (11) mentioned above, further containing: 0.01 parts by mass to 5 parts by mass of a copper compound; and 0.05 parts by mass to 5 parts by mass of a halide of a metal selected from the group consisting of alkali metals and alkaline earth metals, relative to 100 parts by mass of the polyamide resin (A).

(13) A molded article formed by molding the polyamide resin composition of any one of (1) to (12) mentioned above.

(14) A slide member made of the polyamide resin composition of any one of (1) to (12) mentioned above.

(15) A method for producing a polyamide resin composition, characterized by containing melt-kneading a polyamide resin (A); a polyolefin-based graft copolymer (B) having an aromatic-ring-containing polymer in a side chain; and a compatibilizing agent (C).

(16) The method for producing a polyamide resin composition according to (15) mentioned above, wherein the polyamide resin composition is the polyamide resin composition of any one of (1) to (12) mentioned above.

Advantageous Effects of Invention

The present invention makes it possible to obtain a polyamide resin composition having excellent moldability, heat resistance, sliding property and mechanical property, as well as a stable sliding property without depending on the shear rate at an injection molding step during production thereof.

Description of Embodiments

Hereinafter, an embodiment in which the present invention is carried out (hereinbelow, referred to as "the present embodiment") will be explained specifically. The present embodiment mentioned below is an illustration to explain the present invention, and is not intended to limit the present invention to the following content. The present invention may be appropriately modified within the scope of its gist to be carried out.

In the present specification, the term "polyamide" refers to a polymer having an amide (-NHCO-) group in the main chain thereof.

The numerical range "A or more and B or less" may be described as "A to B". For example, the phrase "1 part by mass to 10 parts by mass" means the numerical range including the lower limit (1 part by mass) and the upper limit (10 parts by mass), namely "1 part by mass or more and 10 parts by mass or less".

<Polyamide resin composition>

The polyamide resin composition of the present embodiment is a polyamide resin composition, containing: a polyamide resin (A) (hereinafter, may be referred to as the component (A)); a polyolefin-based graft copolymer (B) having an aromatic-ring-containing polymer in a side chain (hereinafter, may be referred to as the component (B)); and a compatibilizing agent (C) (hereinafter, may be referred to as the component (C)).
Hereinafter, each constituent component of the polyamide resin composition of the present embodiment will be explained.

<<Polyamide resin (A)>>

Although the polyamide resin (A) according to the present embodiment is not limited to the following, examples thereof include: a polyamide (a-1) obtained by ring-opening polymerization of lactam; a polyamide (a-2) obtained by self-condensation of ω-aminocarboxylic acid; a polyamide (a-3) obtained by condensing diamine and dicarboxylic acid, and copolymers thereof.
One of the polyamides may be used alone or a mixture of at least two thereof may be used as the polyamide resin (A).
Although the lactam used to prepare the polyamide (a-1) is not limited to the following, examples thereof include pyrrolidone, caprolactam, undecalactam, and dodecalactam.
Although the ω-aminocarboxylic acid used to prepare the polyamide (a-2) is not limited to the following, examples thereof include ω-amino fatty acid which is a compound obtained by ring-opening of the lactam with water.
As the lactam or the ω-aminocarboxylic acid, at least each of two monomers may be used in combination and condensed.
Although the diamine (monomer) used to prepare the polyamide (a-3) is not limited to the following, examples thereof include linear-chained aliphatic diamines, branched-chained aliphatic diamines, alicyclic diamines, and aromatic diamines.
Although the linear-chained aliphatic diamines are not limited to the following, examples thereof include hexamethylene diamine, and pentamethylene diamine.
Although the branched-chained aliphatic diamines are not limited to the following, examples thereof include 2-methylpentane diamine, and 2-ethylhexamethylene diamine.
Although the alicyclic diamines are not limited to the following, examples thereof include cyclohexanediamine, cyclopentanediamine, and cyclooctanediamine.
Although the aromatic diamines are not limited to the following, examples thereof include p-phenylenediamine, and m-phenylenediamine.
Although the dicarboxylic acid (monomer) used to prepare the polyamide (a-3) is not limited to the following, examples thereof include aliphatic dicarboxylic acids, alicyclic dicarboxylic acids, and aromatic dicarboxylic acids.
Although the aliphatic dicarboxylic acids are not limited to the following, examples thereof include adipic acid, pimelic acid, and sebacic acid.
Although the alicyclic dicarboxylic acids are not limited to the following, examples thereof include cyclohexane dicarboxylic acid.
Although the aromatic dicarboxylic acids are not limited to the following, examples thereof include phthalic acid and isophthalic acid.
The above-mentioned diamines and dicarboxylic acids as monomers may be condensed individually or in combination of at least two thereof.
Although the polyamide of the component (A) is not limited to the following, examples thereof include polyamide 4 (poly α-pyrrolidone), polyamide 6 (polycaproamide), polyamide 10, polyamide 11 (polyundecaneamide), polyamide 12 (polydodecaneamide), polyamide 46 (polytetramethylene adipamide), polyamide 56, polyamide 66 (polyhexamethylene adipamide), polyamide 410, polyamide 610 (polyhexamethylene sebacamide), polyamide 612 (polyhexamethylene dodecamide), polyamide 1010, polyamide 4T, polyamide 6T (polyhexamethylene terephthalamide), polyamide 9T (polynonanemethylene terephthalamide), polyamide 10T, polyamide 6I (polyhexamethylene isophthalamide), polyamide 2Me5T (poly-2-methylpentamethylene terephthalamide (hereinafter, a methyl group may be indicated as Me), polyamide MXD6 (polymethaxylylene adipamide), and polyamide PXD12 (polyparaxylylene dodecamide), and copolyamides containing at least one thereof as a constituent component.

(Constituent ratio of component (A))

As the component (A) of the present embodiment, a polyamide resin having as the main component thereof polyamide 66, polyamide 46, polyamide 4T, polyamide 6T, polyamide 9T polyamide 10T, polyamide 6, polyamide 410, or a copolyamide containing at least one thereof as a constituent component is preferable from the viewpoint of improving the sliding properties. Hereinafter, the term "main component" refers to a component, the amount of which relative to the total mass of the polyamide resin (A) is 50% by mass or more, more preferably 65% by mass to 100% by mass, and even more preferably 70% by mass to 100% by mass.

The polyamide resin having as the main component thereof polyamide 66, polyamide 46, polyamide 4T, polyamide 6T, polyamide 9T polyamide 10T, polyamide 6, polyamide 410, or a copolyamide containing at least one thereof as a constituent component is preferable, and the polyamide resin having polyamide 66 as the main component thereof is more preferable from the viewpoint of improving the heat resistance.

As the component (A) in the polyamide resin composition of the present embodiment, a conventionally-known one may be used or a commercially-available one may also be used.

<<Polyolefin-based graft copolymer (B) having an aromatic-ring-containing polymer in a side chain>>

The polyolefin-based graft copolymer (B) having an aromatic-ring-containing polymer in a side chain in the present embodiment is not particularly limited, as long as a polyolefin-based graft copolymer has a polymer containing an aromatic ring in the side chain thereof.

The aromatic ring is preferably a C6-10 aryl group, and more preferably a phenyl group.

The aromatic-ring-containing polymer is preferably a polymer having a C2-6 alkylene group substituted with a C6-10 aryl group as a repeating unit, more preferably a polymer having a C2-4 alkylene group substituted with a phenyl group as a repeating unit, and even more preferably a polystyrene.

In addition to the aromatic-ring-containing polymer, a vinyl copolymer without having any aromatic ring may be further included as the side chain of the component (B).

The main chain of the component (B) preferably has a polyethylene.

The sliding properties of the resultant polyamide resin composition are improved by containing the component (B).

[Method for preparing component (B)]

Although the method for preparing the component (B) is not particularly limited, the component (B) may be easily prepared by a conventionally known radical reaction. Examples of the method for preparing the component (B) include a method in which a radical catalyst is added to a monomer constituting an olefin-based polymer component containing a polyethylene and a monomer constituting a vinyl-based polymer having an aromatic ring, and then kneaded to be grafted. Additional examples thereof include a method in which a radical catalyst such as a peroxide is added to an olefin-based polymer component or a vinyl-based polymer component having an aromatic ring to allow free radicals to generate, followed by melt-kneading the generated free radicals with the other polymer component to be grafted.

The component (B) can be prevented from falling off from a polyamide resin, and a polyamide resin composition having excellent sliding properties, particularly abrasion resistance, can be obtained by using the polyolefin-based graft copolymer having the main chain including a polyolefin and the side chain including an aromatic-ring-containing polymer as the component (B), which is preferable.

(Amount of polystyrene in component (B))

The component (B) preferably contains at least 50% by mass of polystyrene relative to 100% by mass of the component (B). The amount of the polystyrene relative to the total mass of the component (B) may be 100% by mass or less.

(Constituent ratio of component (B))

The ratio of the olefin-based polymer (b1) and the vinyl-based polymer (b2) having an aromatic ring which constitute the component (B), (b1):(b2), is preferably 80:20 to 20:80 (mass ratio), and particularly preferably 60:40 to 40:60.

When the ratio is within the above-mentioned ratio, the sliding properties of the resultant polyamide resin composition are improved.

The vinyl-based copolymer (b2) having an aromatic ring exhibits high rigidity due to a high glass transition temperature which is a characteristic of the aromatic ring. In addition, the vinyl-based copolymer (b2) having an aromatic ring prevents the component (B) from being easily baked to be fused to a sliding part such as an interlocking part of a joining material or a material on the sliding surface, when the temperature of the sliding surface is increased by the frictional force (frictional heat) applied onto the sliding surface of the vinyl-based copolymer. As a result, the sliding properties are maintained for a long term and the abrasion resistance is particularly improved.

(Amount of component (B))

The amount of the component (B) in the polyamide resin composition of the present embodiment relative to 100 parts by mass of the polyamide resin (A) is preferably 1 part by mass to 15 parts by mass, more preferably 2 parts by mass to 12 parts by mass, and more preferably 3 parts by mass to 10 parts by mass. When the amount of the component (B) is the above-mentioned lower limit or more, the sliding properties of the resultant polyamide resin composition are effectively exhibited. When the amount of the component (B) is the above-mentioned upper limit or less, the abrasion resistance and the mechanical properties of the resultant polyamide resin composition are improved.

As the component (B) in the polyamide resin composition of the present embodiment, any conventionally-known or commercially-available one may be used, as long as it is a polyolefin-based graft copolymer having an aromatic-ring-containing polymer in a side chain thereof.

<<Compatibilizing agent (C)>>

The compatibilizing agent (C) in the present embodiment is a compound that can improve the compatibility of the component (A) and the component (B). The component (C) preferably contains at least one selected from the group consisting of an olefin skeleton and an aromatic ring skeleton from the viewpoint of superior sliding properties, mechanical properties, heat resistance, long-term heat resistance, moldability, processability, and the like.

Although a compound containing an olefin skeleton is not limited to the following, at least one selected from low-density polyethylene (LDPE), high-density polyethylene (HDPE), low-density linear polyethylene (LLDPE), ultra-high-molecular-weight polyethylene (UHMWPE), ultra-low-density polyethylene (VLDPE) obtained by metallocene catalysis, polyethylene, alpha olefin, diolefin and the like may be used, for example. In the present specification, the term "olefin skeleton" refers to a compound consisting of carbon atoms and hydrogen atoms.

Although a compound containing an aromatic ring skeleton is not limited to the following, at least one selected from polystyrene, phenylene ether, modified polyphenylene ether, and the like, which has an aromatic ring skeleton, may be used, for example.

Although a compound containing an olefin skeleton and an aromatic ring skeleton is not limited to the following, at least one selected from styrene/butadiene/styrene block copolymer (SBS), styrene/ethylene/butylene/styrene block copolymer (SEBS) which is a hydrogen additive thereof, styrene/butadiene copolymer (SBR), styrene/ethylene/butylene copolymer (HSBR) which is a hydrogen additive thereof, styrene/isoprene/styrene block copolymer (SIS), and styrene/ethylene/propylene/styrene block copolymer (SEPS) which is a hydrogen additive thereof may be used, for example.

Although an alpha olefin is not limited to the following, examples thereof include ethylene, propylene, butene-1, octene-1, and butadiene.

Although a diolefin is not limited to the following, examples thereof include diolefin homopolymer and copolymer.

The compatibilizing agent (C) in the present embodiment preferably has in the main chain thereof at least one selected from the group consisting of an olefin skeleton and an aromatic ring skeleton, more preferably only either an olefin skeleton or a styrene skeleton, and particularly preferably only an olefin skeleton.

The compatibilizing agent (C) in the present embodiment preferably has an amide bond.

Although the method for imparting an amide bond to the compatibilizing agent (C) in the present embodiment is not particularly limited, examples thereof include: a method in which in a step of producing the above-mentioned compound containing at least one selected from the group consisting of an olefin skeleton and an aromatic ring skeleton, a polyamide and/or a copolymer thereof, and/or a combination thereof are reacted; and a method in which a pellet of the above-mentioned compound containing at least one selected from the group consisting of an olefin skeleton and an aromatic ring skeleton is mixed with a polyamide and/or a copolymer thereof, and/or a combination thereof, and then kneaded with an extruder to allow the reaction to proceed.

The compatibilizing agent (C) in the present embodiment preferably has a reactive functional group which can react with an amide group in a terminal group and/or the main chain of the polyamide resin (A).

Examples of the reactive functional group include a carboxy group, acid anhydride group, epoxy group, oxazoline group, amino group, isocyanate group, maleic acid, itaconic acid, citraconic acid, allylsuccinic acid, cyclohex-4-ene-1, 2-dicarboxylic acid, 4-methylenecyclohex-4-ene-1,2-dicarboxylic acid, bicyclo(2,2,1)hept-5-anhydride 2,3-dicarboxylic acid, x-methylbicyclo(2,2,1)hept-5-ene-2,2-dicarboxylic acid, and alkyl (methacrylate) acrylate (methyl acrylate).

Although the method for imparting a reactive functional group to the compatibilizing agent (C) in the present embodiment is not particularly limited, examples thereof include: a method in which in a step of producing the above-mentioned compound containing at least one selected from the group consisting of an olefin skeleton and an aromatic ring skeleton, a compound having the reactive functional group is reacted; and a method in which a pellet of the above-mentioned compound containing at least one selected from the group consisting of an olefin skeleton and an aromatic ring skeleton is mixed with a compound having the reactive functional group and the like and then kneaded with an extruder to allow the reaction to proceed.

The compatibilizing agent (C) in the present embodiment preferably contains at least one selected from the group consisting of an amide bond and a reactive functional group having a structural unit derived from a carboxylic anhydride, more preferably contains at least one selected from the group consisting of an amide bond and a structural unit derived from maleic acid, particularly preferably contains an amide bond, and most preferably contains an amide bond in the side chain thereof.

The compatibilizing agent (C) preferably contains: at least one selected from the group consisting of an olefin skeleton and an aromatic ring skeleton; an amide bond; and a reactive functional group having a structural unit derived from a carboxylic anhydride from the viewpoint of further improved sliding properties, mechanical properties, heat resistance, long-term heat resistance, moldability, and processability. The component (C) more preferably contains at least one selected from the group consisting of an olefin skeleton and an aromatic ring skeleton in the main chain thereof, and at least one selected from the group consisting of an amide bond and a structural unit derived from maleic acid in the main chain or side chain thereof. The component (C) even more preferably contains only one selected from the group consisting of an olefin skeleton and a styrene skeleton in the main chain thereof, and an amide bond in the main chain or side chain thereof. The component (C) particularly preferably contains an olefin skeleton in the main chain thereof, and an amide bond in the side chain thereof. The component (C) is most preferably a graft copolymer containing an olefin skeleton in the main chain thereof and an amide bond in the side chain thereof.

The graft copolymer containing an olefin skeleton in the main chain thereof and an amide bond in the side chain thereof may be obtained by reacting a residue of an unsaturated monomer in the main chain with the terminal of a skeleton having an amide bond, for example.

Examples of the unsaturated monomer include unsaturated epoxide, unsaturated carboxylic anhydride, salt or ester of unsaturated carboxylic acid, and vinyl ester of saturated carboxylic acid.

Although the unsaturated carboxylic anhydride is not limited to the following, examples thereof include maleic acid, itaconic acid, citraconic acid, allylsuccinic acid, cyclohex-4-ene-1,2-dicarboxylic acid, 4-methylenecyclohex-4-ene-1,2-dicarboxylic acid, bicyclo(2,2,1)hept-5-anhydride 2,3-dicarboxylic acid, and x-methylbicyclo(2,2,1)hept-5-ene-2,2-dicarboxylic acid.

Although the salt or ester of unsaturated carboxylic acid is not limited to the following, examples thereof include alkyl(methacrylate)acrylate (methylacrylate).

Although the vinyl ester of saturated carboxylic acid is not limited to the following, examples thereof include vinyl acetate.

The component (C) is preferably a graft copolymer, and more preferably a graft copolymer having an olefin skeleton in the main chain and an amide bond in the side chain from the viewpoint of further improving the compatibility of the component (A) and the component (B) as well as sliding properties, mechanical properties, heat resistance, long-term heat resistance, moldability, and processability in the polyamide resin composition of the present embodiment.

As the component (C), a conventionally-known one may be used, and a commercially available one may also be used.

[Method for producing component (C)]

The component (C) may be produced using a masterbatch prepared in advance by melt-kneading a compound having at least one reactive functional group capable of reacting an amide group in a terminal group and/or the main chain of the polyamide resin (A) with a compound having at least one selected from the group consisting of an olefin skeleton and an aromatic ring skeleton (such as a thermoplastic resin such as a polyamide resin), for example.

Alternatively, the component (C) may also be obtained by using a masterbatch prepared in advance by melt-kneading a precursor of a graft copolymer having an unsaturated monomer in the skeleton thereof and a thermoplastic resin having a functional group reactive with the unsaturated monomer, for example.

Alternatively, the component (C) may also be obtained by blending a graft copolymer precursor having an unsaturated monomer in the skeleton thereof when the component (A) and the component (B) are melt-kneaded during production of the polyamide resin composition of the present embodiment, thereby reacting the graft copolymer precursor with the component (A). Namely, a composition containing the component (A) and the component (B) is melt-kneaded with an extruder or the like, thereby obtaining a polyamide resin composition containing the component (A), the component (B) and the component (C).

(Amount of component (C))

The amount of the component (C) in the polyamide resin composition of the present embodiment relative to 100 parts by mass of the polyamide resin (A) is preferably 0.01 part by mass to 15 parts by mass, more preferably 0.05 parts by mass to 15 parts by mass, even more preferably 0.1 parts by mass to 12 parts by mass, still more preferably 0.2 parts by mass to 10 parts by mass, and most preferably 0.2 parts by mass to 3 parts by mass. When the amount is the above-mentioned lower limit or more, the sliding properties, moldability, processability, and heat resistance are effectively exhibited. When the amount is the above-mentioned upper limit or less, the sliding properties, mechanical properties, heat resistance, long-term heat resistance, moldability, and processability are improved.

The sliding properties, mechanical properties, heat resistance, long-term heat resistance, moldability, and processability are further improved by blending a compatibilizing agent which improves the compatibility of the polyamide resin (A) with the polyolefin-based graft copolymer (B) having an aromatic-ring-containing polymer in a side chain.

(Mass ratio (C)/(B) of component (C) to component (B))

When the component (C) has an olefin skeleton, the mass ratio (C)/(B) of the component (C) to the component (B) is preferably 0.01 to 2, and more preferably 0.05 to 0.9.

When the component (C) has an aromatic ring skeleton, the mass ratio (C)/(B) of the component (C) to the component (B) is preferably 0.0001 to 1, more preferably 0.05 to 0.9, and even more preferably 0.1 to 0.4.

When the mass ratio of the component (C) to the component (B) is within the above-mentioned range, the sliding properties, mechanical properties, heat resistance, long-term heat resistance, moldability, and processability are further improved.

(Copper compound)

Although a copper compound available in the present embodiment is not limited to the following, examples thereof include copper halides, copper acetate, copper propionate, copper benzoate, copper adipate, copper terephthalate, copper isophthalate, copper salicylate, copper nicotine, copper stearate, and copper complex salts coordinated with chelating agents such as ethylenediamine or ethylenediaminetetraacetic acid.

One of these copper compounds may be used alone or at least two thereof may be mixed.

Among them, the copper compound is preferably copper iodide, cuprous bromide, cupric bromide, cuprous chloride, or copper acetate, and more preferably copper iodide.

The copper compound is preferably used in the form of a masterbatch with a halide of a metal selected from the group consisting of alkali metals and alkaline earth metals from the viewpoint of sliding properties.

(Amount of blended copper compound)

The amount of the blended copper compound relative to 100 parts by mass of the component (A) is 0.01 parts by mass to 5 parts by mass, more preferably 0.01 parts by mass to 4 parts by mass, even more preferably 0.03 parts by mass to 3 parts by mass, and still more preferably 0.03 parts by mass to 1.5 parts by mass.

When the amount of the blended copper compound is within the above-mentioned range, heat aging resistance can be improved and copper precipitation and corrosion can be suppressed. Furthermore, effects of reducing friction coefficient and wear depth are exhibited.

(Halide of metal selected from the group consisting of alkali metals and alkaline earth metals)

Examples of the halide of a metal selected from the group consisting of alkali metals and alkaline earth metals available in the present embodiment (hereinafter, may be abbreviated as "metal halide") include potassium iodide, sodium iodide, potassium bromide, potassium chloride, and sodium chloride. Among them, potassium iodide is preferable.

One of these metal halides may be used alone or at least two thereof may be mixed.

(Amount of blended metal halide)

The amount of the blended metal halide relative to 100 parts by mass of the polyamide resin (A) is 0.05 parts by mass to 5 parts by mass, preferably 0.1 parts by mass to 4 parts by mass, and more preferably 0.2 parts by mass to 3 parts by mass.

When the amount of the blended metal halide is within the above-mentioned range, the heat aging resistance can be improved and the copper precipitation and corrosion can be suppressed. Furthermore, effects of reducing the friction coefficient and wear depth are exhibited.

(Particle sizes of copper compound and metal halide)

Although the maximum particle sizes of the blended copper compound and metal halide are not particularly limited, both the maximum particle sizes are preferably 50 $\mu$m or less, more preferably 20 $\mu$m or less, and even more preferably 10 $\mu$m or less. In contrast, the maximum particle sizes of the copper compound and metal halide may be 10 nm or more.

In the present invention, the term "particle size" refers to a biaxial average diameter, namely, an average value of the short axis and the long axis. Here, the terms "short axis" and "long axis" refer to the short side and long side, respectively, of a circumscribed rectangle that has the smallest area that circumscribes the particle. The maximum particle sizes of the copper compound and metal halide can be determined based on number by observing at least 50 particles using a scanning electron microscope (SEM).

When the maximum particle size is within the above-mentioned range, the copper compound and metal halide tend to be finely dispersed in the polyamide resin (A) even under conditions where the fluid amount in the polyamide resin (A) is low. As a result, there is a tendency in which metal precipitation and corrosion are suppressed, the toughness, heat aging resistance, external appearance, and color tone of the resultant polyamide resin composition are further improved, and the friction coefficient and wear depth are further reduced.

(Molar ratio of halogen and copper)

When a copper compound and a metal halide are made into a masterbatch, the molar ratio of halogen to copper (halogen/copper) in the masterbatch is preferably 3 to 30, more preferably 4 to 25, and even more preferably 5 to 23.

When the molar ratio of halogen to copper is the above-mentioned lower limit or more, there is a tendency in which the copper precipitation and the metal corrosion are further suppressed. When the molar ratio of halogen to copper is the above-mentioned upper limit or less, there is a tendency in which the corrosion of a screw of a molding machine or the like is further suppressed without impairing mechanical properties such as toughness.

(Organic compound having at least one amide group)

In the present embodiment, an organic compound having at least one amide group (excepting a polyamide) may be present in a masterbatch.

There is a tendency in which copper compounds and metal halides are prevented from dissolving in fluids in the component (A) and forming complexes during melt-kneading by containing an organic compound having at least one amide group (excepting a polyamide). Furthermore, there is a tendency in which the dispersion of the copper compound and the metal halide in the component (A) is stabilized and the precipitation and deterioration are prevented without adversely affecting the component (A).

The organic compound having at least one amide group available in the present embodiment is a compound having at least one amide group in a molecular chain thereof. Although the organic compound having at least one amide group is not limited to the following, examples thereof include monoamides, substituted amides, methylol amides, and bisamides.

The monoamides are of the general formula: $R\text{-}CONH_2$ (wherein R is a saturated aliphatic, unsaturated aliphatic or aromatic group having 8 to 30 carbon atoms, or a group formed therefrom by partially substituting -H thereof with -OH).

Although the monoamides are not limited to the following, examples thereof include lauric acid amide, palmitic acid amide, stearic acid amide, behenic acid amide, hydroxystearic acid amide, oleic acid amide, erucic acid amide and ricinoleic acid amide.

The substituted amides are of the general formula: $R^1\text{-}CONH\text{-}R^2$ (wherein $R^1$ and $R^2$ are each independently a saturated aliphatic, unsaturated aliphatic or aromatic group having 8 to 30 carbon atoms, or a group formed therefrom by partially substituting -H thereof with -OH).

Although the substituted amides are not limited to the following, examples thereof include N-lauryl lauric acid amide, N-palmityl palmitic acid amide, N-stearyl stearic acid amide, N-oleyl oleic acid amide, N-stearyl oleic acid amide, N-oleyl stearic acid amide, N-stearyl erucic acid amide, N-oleyl palmitic acid amide, N-stearyl 12-hydroxystearic acid amide, and N-oleyl 12-hydroxystearic acid amide.

The methylol amides are of the general formula: $R\text{-}CONHCH_2OH$ (wherein R is a saturated aliphatic, unsaturated aliphatic or aromatic group having 8 to 30 carbon atoms, or a group formed therefrom by partially substituting -H thereof with -OH).

Examples of the methylol amides include methylol stearic acid amide, and methylol behenic acid amide.

The bisamides are of the general formula: $(R\text{-}CONH)_2(CH_2)_n$ (wherein R is a saturated aliphatic, unsaturated aliphatic or aromatic group having 8 to 30 carbon atoms, or a group formed therefrom by partially substituting -H thereof with -OH, and n is 1 to 8).

Although the bisamides are not limited to the following, examples thereof include methylene bislauric acid amide, methylene bislauric acid amide, methylene bishydroxystearic acid amide, ethylene biscapric acid amide, ethylene bislauric acid amide, ethylene bisstearic acid amide, ethylene bisisostearic acid amide, ethylene bishydroxystearic acid amide, ethylene bisbehenic acid amide, hexamethylene bisstearic acid amide, hexamethylene bisbehenic acid amide, hexamethylene bishydroxystearic acid amide, butylene bishydroxystearic acid amide, N,N'-distearyl adipic acid amide, N,N'-distearyl sebacic acid amide, methylene bisoleic acid amide, ethylene bisoleic acid amide, ethylene biserucic acid amide, hexamethylene bisoleic acid amide, N,N'-dioleyl adipic acid amide, N,N'-dioleyl sebacic acid amide, m-xylylene bisstearic acid amide, and N,N'-distearyl isophthalic acid amide.

One of these organic compounds having at least one amide group may be used alone or at least two thereof may be mixed.

Among them, bisamides are preferable.

(Amount of blended organic compound having at least one amide group)

The amount of the blended organic compound having at least one amide group relative to 100 parts by mass of the polyamide resin (A) is preferably 0.1 parts by mass to 10 parts by mass, more preferably 0.5 parts by mass to 5.0 parts by mass, and even more preferably 1.0 parts by mass to 4.0 parts by mass.

When the amount of the blended organic compound having at least one amide group is within the above-mentioned range, there is a tendency in which the dispersibility of the copper compound and the metal halide in the component (A) is further improved, and the heat aging resistance is further improved, thereby further suppressing the copper precipitation and metal corrosion, and further reducing the friction coefficient and the wear depth.

(Fluid amount in masterbatch)

The fluid amount in the masterbatch relative to the total mass of the masterbatch is preferably 0.06% by mass to 1.0% by mass, more preferably 0.10% by mass to 0.75% by mass, and even more preferably 0.15% by mass to 0.75% by mass.

The fluid in the masterbatch may be present as a fluid bonded to a polyamide molecule. Alternatively, the fluid may be adhered to the surface of the masterbatch, such as the surface of a masterbatch pellet or masterbatch powders.

When the fluid amount is within the above-mentioned range, there is a tendency in which the aggregation of the copper compound and the metal halide is further suppressed, thereby further improving the mechanical properties such as toughness, and the heat aging resistance, further suppressing the copper precipitation and metal corrosion, and further reducing the friction coefficient and the wear depth.

The fluid amount in the masterbatch can be adjusted by controlling the degree of vacuum in an extruder, the immersion time in a strand bath during cooling, the immersion length, or the amount of water spray.

In the present embodiment, the fluid amount in the masterbatch can be measured by a coulometric titration method (Karl Fischer method) using a fluid vaporizer (such as VA-06 model manufactured by Mitsubishi Chemical Corporation).

(Fluid amount in polyamide resin composition)

The fluid amount in the polyamide resin composition in the present embodiment relative to the total mass of the polyamide resin composition is preferably 0.01% by mass to 1% by mass, more preferably 0.03% by mass to 0.5% by mass, and even more preferably 0.05 % by mass to 0.30% by mass.

The fluid in the polyamide resin composition may be present as a fluid bonded to a polyamide molecule, or a fluid adhered to the surface of the polyamide resin composition, such as the surface of a pellet or powders. The fluid is more preferably present as a fluid bonded to a polyamide molecule from the viewpoint of improving effects of the present invention.

When the fluid amount in the polyamide resin composition is within the above-mentioned range, there is a tendency in which the aggregation of the copper compound and the metal halide is further suppressed, thereby further improving the mechanical properties such as toughness, and the heat aging resistance, further suppressing the copper precipitation and metal corrosion, and further reducing the friction coefficient and the wear depth.

The fluid amount in the polyamide resin composition can be adjusted by controlling the degree of vacuum in an extruder, the immersion time in a strand bath during cooling, the immersion length, or the amount of water spray.

In the present embodiment, the fluid amount in the polyamide resin composition can be measured by a coulometric titration method (Karl Fischer method) using a fluid vaporizer (such as VA-06 model manufactured by Mitsubishi Chemical Corporation).

(Hindered phenol-based thermal stabilizer)

It is preferable that a thermal stabilizer be further contained in the polyamide resin composition.

Although the thermal stabilizer is not particularly limited, examples thereof include: phenol-based stabilizers such as a hindered phenol compound; phosphite-based stabilizers; hindered amine-based stabilizers; triazine-based stabilizers; and sulfur-based stabilizers.

A hindered phenol compound which is a phenol-based stabilizer is preferable

These thermal stabilizers also exhibit effects of reducing the friction coefficient and the wear depth.

The amount of the hindered phenol-based thermal stabilizer relative to 100 parts by mass of the component (A) is preferably 0.01 parts by mass to 5 parts by mass, and more preferably 0.015 parts by mass to 3 parts by mass.

(Filler)

The polyamide resin composition may further contain a filler, as needed.

Although the filler is not limited to the following, examples thereof include fiber fillers such as carbon fibers, glass fibers, calcium silicate fibers, potassium titanate fibers, aluminum borate fibers, wollastonite, and carbon nanotubes.

Among them, carbon fibers and glass fibers are preferable, and glass fibers are preferable from the viewpoint of enhancing the strength of the polyamide resin composition, and carbon fibers are preferable from the viewpoint of improving the sliding properties.

As the carbon fibers, any of polyacrylonitrile (PAN)-based carbon fibers, and pitch-based carbon fibers may be used, for example. The PAN-based carbon fibers are preferably used from the viewpoint of the mechanical properties.

One of the above-mentioned fiber fillers may be used alone or at least two thereof may be used in combination.

The amount of the fiber fillers relative to 100 parts by mass of the component (A) is preferably 1 part by mass to 50 parts by mass, more preferably 1 part by mass to 30 parts by mass, even more preferably 3 parts by mass to 20 parts by mass, and particularly preferably 5 parts by mass to 10 parts by mass from the viewpoint of improving the sliding properties.

The carbon fibers are preferably added in the form of short fibers of above 3 mm to 10 mm by melt-kneading with an extruder from the viewpoint of productivity. At this time, the carbon fibers are preferably added from a side feeder from the viewpoint of preventing the carbon fibers from breaking.

The carbon fibers are preferably coated with a urethane-based sizing agent, maleic anhydride-based sizing agent, acrylic sizing agent, or polyamide-based sizing agent from the viewpoint of the affinity with the polyamide resin (A).

The diameter of the carbon fiber is preferably 5 $\mu$m or more and 10 $\mu$m or less from the viewpoint of physical properties and sliding properties.

(Moldability improver)

A moldability improver may be added to the polyamide resin composition, as needed, within a range in which the object of the present invention is not impaired.

Although the moldability improver is not particularly limited, examples thereof include higher fatty acids, higher fatty acid metal salts, higher fatty acid esters, and higher fatty acid amides.

Although the higher fatty acids are not limited to the following, examples thereof include saturated or unsaturated linear or branched aliphatic monocarboxylic acids having 8 to 40 carbon atoms, such as stearic acid, palmitic acid, behenic acid, erucic acid, oleic acid, lauric acid, and montanic acid.

Among them, stearic acid and montanic acid are preferable.

The higher fatty acid metal salts are metal salts of the higher fatty acids.

The metal element of the metal salt is preferably an element of groups 1, 2, or 3 of the periodic table of elements, zinc, aluminum, or the like, and more preferably an element of group 1 or 2, such as calcium, sodium, potassium or magnesium, aluminum or the like.

Although the higher fatty acid metal salts are not limited to the following, examples thereof include: metal salts of stearic acid such as calcium stearate, aluminum stearate, zinc stearate, and magnesium stearate; metal salts of montanic acid such as calcium montanate and sodium montanate; and metal salts of palmitic acid such as calcium palmitate.

Among them, metal salts of montanic acid and metal salts of stearic acid are preferable.

The higher fatty acid esters are esterified products of the higher fatty acids and alcohols.

Esters of aliphatic carboxylic acids having 8 to 40 carbon atoms and aliphatic alcohols having 8 to 40 carbon atoms are preferable.

Although the aliphatic alcohols are not limited to the following, examples thereof include stearyl alcohol, behenyl alcohol, and lauryl alcohol.

Examples of the higher fatty acid esters include stearyl stearate and behenyl behenate.

The higher fatty acid amides are amide compounds of the higher fatty acids.

Although the higher fatty acid amides are not limited to the following, examples thereof include stearic acid amide, oleic acid amide, erucic acid amide, ethylenebisstearylamide, ethylenebisoleylamide, N-stearylstearylamide, and N-stearylerucamide.

Each one of these higher fatty acids, higher fatty acid metal salts, higher fatty acid esters, and higher fatty acid amides may be used alone, or at least two thereof may be used in combination.

(Colorant)

A colorant may be added to the polyamide resin composition, as needed, within a range in which the object of the present invention is not impaired.

Although the colorant is not particularly limited, examples thereof include: dyes such as nigrosine; pigments such as titanium oxide and carbon black; metallic particles such as aluminum, colored aluminum, nickel, tin, copper, gold, silver, platinum, iron oxide, stainless steel, and titanium; and metallic pigments such as mica pearl pigments and colored graphite.

(Other resins)

Other resins may be added to the polyamide resin composition, as needed, within a range in which the object of the present invention is not impaired.

Although such resins are not particularly limited, examples thereof include the below-mentioned thermoplastic resins and rubber components.

Although the thermoplastic resin is not limited to the following, examples thereof include: polystyrene-based resins such as atactic polystyrene, isotactic polystyrene, syndiotactic polystyrene, AS (acrylonitrile-styrene) resin, and ABS (acrylonitrile-butadiene-styrene) resin; acrylic resins such as polyacrylic acid, polyacrylic acid ester, and polymethyl methacrylate; and halogen-containing vinyl compound-based resins such as polyvinyl chloride and polyvinylidene chloride.

One of these thermoplastic resins may be used alone or at least two thereof may be used in combination.

Examples of the rubber component include natural rubber, polybutadiene, polyisoprene, polyisobutylene, neoprene, polysulfide rubber, THIOKOL rubber, acrylic rubber, urethane rubber, silicone rubber, epichlorohydrin rubber, styrene-butadiene block copolymer (SBR), hydrogenated styrene-butadiene block copolymer (SEB), styrene-butadiene-styrene block copolymer (SBS), hydrogenated styrene-butadiene-styrene block copolymer (SEBS), styrene-isoprene block copolymer (SIR), hydrogenated styrene-isoprene block copolymer (SEP), styrene-isoprene-styrene block copolymer (SIS), hydrogenated styrene-isoprene-styrene block copolymer (SEPS), styrene-butadiene random copolymer, hydrogenated styrene-butadiene random copolymer, styrene-ethylene-propylene random copolymer, styrene-ethylene-butylene random copolymer, ethylene-propylene copolymer (EPR), ethylene-(1-butene) copolymer, ethylene-(1-hexene) copolymer, ethylene-(1-octene) copolymer ,ethylene-propylene-diene copolymer (EPDM), and core shell types such as butadiene-acrylonitrile-styrene-core shell rubber (ABS), methyl methacrylate-butadiene-styrene-core shell rubber (MBS), methyl methacrylate-butyl acrylate-styrene-core shell rubber (MAS), octyl acrylate-butadiene-styrene-core shell rubber (MABS), alkylacrylate-butadiene-acrylonitrile-styrene-core shell rubber (AABS), butadiene-styrene-core shell rubber (SBR), and siloxane-containing core shell rubber such as methyl methacrylate-butyl acrylate siloxane.

One of these rubber components may be used alone or at least two thereof may be used in combination.

Although the use of the polyamide resin composition according to the present invention is not particularly limited provided that the use requires mechanical properties and sliding properties, the polyamide resin composition may be widely used as a raw material of a sliding part of an electric/electronic part, automobile part, architectural part, or industrial part, to be molded into a molded article such as an electrical/electronic part, automobile part, architectural part, or sliding part.

Examples of the sliding part include bearings, gears, door checkers, and chain guide parts, which are generally used injection molded articles.

[Method for producing polyamide resin composition]

The polyamide resin composition of the present embodiment may be obtained by mixing and kneading a polyamide resin (A), a polyolefin-based graft copolymer (B) having an aromatic-ring-containing polymer in a side chain, and a compatibilizing agent (C), with a copper compound, metal halide, and other components, which are blended as needed.

It is preferable that the copper compound and metal halide be made into a masterbatch in advance, followed by being melt-kneaded together with the component (A), the component (B), and the component (C). It is also preferable that the copper compound, the metal halide, and the component (A) be made into a masterbatch in advance, followed by being melt-kneaded together with the component (B) and the component (C).

The component (C) may be formed by blending a raw material of the component (C) and melt-kneading in a twin-screw extruder when the component (A) is mixed and kneaded with a copper compound, a metal halide, and other components, which are blended as needed, during the production of the polyamide resin composition.

[Step of preparing masterbatch]

The masterbatch is prepared by melt-kneading the copper compound and the metal halide.

It is preferable that the organic compound having at least one amide group (excepting a polyamide) be blended in addition to the copper compound and the metal halide.

It is preferable that the component (A) be blended in addition to the organic compound having at least one amide group (excepting a polyamide).

In the case where the organic compound having at least one amide group (excepting a polyamide) and the component (A) are blended, the copper compound, the metal halide, and the organic compound having at least one amide group (excepting a polyamide) may be each separately blended with the component (A). Alternatively, at least two types selected from the three types of the compounds may be mixed in advance and then blended with the component (A); at least two types selected from the three types of the compounds may be mixed and pulverized in advance, and then blended with the component (A); or at least two types selected from the three types of the compounds may be mixed, pulverized and tableted in advance, and then blended with the component (A).

A conventionally-known method such as a method in which a tumbler, a Henschel mixer, a Proshare mixer, a Nauta mixer, a flow jet mixer or the like is used to conduct mixing may be applied as the method for mixing the compounds.

A conventionally-known method may be applied as the method for pulverizing the compounds. Examples of the method for pulverizing the compounds include methods in which any of hammer mill, knife mill, ball mill, jaw crusher, cone crusher, roller mill, jet mill, and millstone is used to conduct pulverizing.

A conventionally-known method such as a compression granulation method, a tablet molding method, a dry extrusion granulation method, or a melt extrusion granulation method may be applied as the method for tableting the compounds.

A device used to conduct melt-kneading is not particularly limited, and any conventionally-known device may be used. For example, a melt-kneading device such as a single-screw or twin-screw extruder, a Banbury mixer, or a mixing roll is preferably used. Among them, a twin-screw extruder is preferably used. Furthermore, the melt-kneading device may be equipped with a deaeration (vent) apparatus and a side feeder apparatus.

The melt-kneading temperature according to the present embodiment is preferably within a range from a temperature higher by 1°C than the melting point or the softening point of the component (A) determined by differential scanning calorimetry (DSC) in accordance with JIS K7121 to 310°C, more preferably within a range from a temperature higher by 10°C than the melting point or the softening point to 300°C, and even more preferably within a range from a temperature higher by 15°C than the melting point or the softening point to 295°C. In the present embodiment, the melt-kneading temperature is the set temperature in a barrel of an extruder. The shear rate in a kneader is preferably about 100 (SEC$^{-1}$) or more. Furthermore, the average residence time during kneading is preferably about 1 minute to 15 minutes.

(Step of melt-kneading masterbatch, component (A), component (B), and component (C))

The polyamide resin composition of the present embodiment is prepared by melt-kneading the masterbatch, the component (A), the component (B), and the component (C), with other components which are blended, as needed. In the case where the component (A) is blended in the masterbatch, the polyamide resin composition of the present embodiment is prepared by adding the component (B) and the component (C) to the masterbatch and then melt-kneading the mixture.

(Total mass of the copper compound and the metal halide)

The total mass of the copper compound and the metal halide relative to 100 parts by mass of the polyamide resin (A) is preferably 0.01 parts by mass to 100 parts by mass, more preferably 0.05 parts by mass to 20 parts by mass, and even more preferably 0.1 parts by mass to 1 part by mass.

When the total mass of the copper compound and the metal halide is within the above-mentioned range, there is a tendency in which the metal copper precipitation and the metal corrosion in an extruder or a molding machine are further suppressed, and the stability during processing is further improved. As a result, there is a tendency in which the heat aging resistance is further improved, the friction coefficient and the wear depth are further reduced, and the change in external color due to water absorption is further suppressed without deteriorating mechanical properties of a product.

The blend ratio of the component (B) and the component (C) relative to 100% by mass of the polyamide resin (A) is mentioned above.

The melt-kneading step is preferably carried out using various extruders conventionally-used such as a single-screw or twin-screw extruder. The melt-kneading step is particularly preferably carried out using a twin-screw extruder from the viewpoint of the productivity and the versatility. At this time, although the melt-kneading temperature depends on the type of the component (A), the temperature of a melted resin discharged from a discharge outlet of an extruder is preferably adjusted to a temperature equal to or higher than the melting points of the component (A), the component (B), and the component (C).

When the melt-kneading temperature is within the above-mentioned range, defects in extrusion-kneading are less likely to occur, and the component (B) and the component (C) can be finely dispersed.

In the case of a twin-screw extruder, an extruder screw preferably has a kneading zone in which at least two kneading disks are combined. The kneading zone is an area where high shear is applied while suppressing the progress of the melted resin in an extrusion direction so as to allow kneading to be carried out effectively.

In the melt-kneading step, the component (A), the component (B), the component (C), and the masterbatch (the copper compound and the metal halide), with, as needed, other components (such as a hindered phenol-based thermal stabilizer) are supplied from the most upstream supply port of a twin-screw extruder, and then melt-kneaded in a first kneading zone to obtain a first melt-kneaded product. Furthermore, it is preferable that fiber fillers be supplied, if necessary, from a side supply port provided on the downstream side of the first kneading zone, and the unmelted fiber fillers be dispersed in the first melt-kneaded product in a second kneading zone provided on the downstream side of the side supply port.

Each extruder condition (such as barrel temperature, screw rotation number, and discharged amount) is desirably set such that the resin temperature of the polyamide resin composition discharged from an extruder outlet after the melt-kneading step is higher than the crystallization temperature of the component (A) and is within a range of 280°C or more and 400°C or less. When the temperature of the polyamide resin composition at the discharge outlet is within a range of 280°C or more and 400°C or less, the component (A), the component (B), and the component (C) can be further finely dispersed. As a result, a polyamide resin composition having excellent sliding properties and mechanical properties can be obtained.

The temperature of the polyamide resin composition is preferably measured by, for example, directly contacting a detection part of a commercially-available thermocouple thermometer with the melted polyamide resin composition discharged from an extruder outlet.

The set temperature of an extruder that allows the above-mentioned temperature of the polyamide resin composition to be achieved is preferably 280°C or more and 400°C or less.

A molded article of the polyamide resin composition of the present embodiment can be obtained by molding the polyamide resin composition.

The method for obtaining a molded article is not particularly limited, and an extrusion molding, injection molding, vacuum molding, blow molding, injection compression molding, decorative molding, molding of other materials, gas-assisted injection molding, foam injection molding, low-pressure molding, ultra-thin injection molding (ultra-high-speed injection molding), in-mold composite molding (insert molding or outsert molding) or another known molding method may be used, for example.

The set temperature of a molding machine when the polyamide resin composition of the present embodiment is molded is preferably within a range from a temperature higher by 5°C than the melting point of the component (A) used to 310°C, more preferably within a range from a temperature higher by 10°C than the melting point of the component (A) used to 300°C, and even more preferably within a range from a temperature higher by 15°C than the melting point of the component (A) used to 295°C.

When the set temperature of a molding machine is within the above-mentioned range, the polyamide resin composition can be effectively kneaded during molding, and the component (B) and the component (C) in the polyamide resin composition can be further finely dispersed.

Although the polyamide resin composition of the present invention may be used without particular limitations, in the case where mechanical properties and sliding properties are required, the polyamide resin composition may be widely used as a raw material of a sliding part of an electric/electronic part, robot industry, automobile part, architectural part, or industrial part. Examples of the sliding part include bearings, gears, door checkers, and chain guide parts, which are generally used injection molded articles.

[Examples]

Hereinafter, the present invention will be explained in detail with reference to specific examples and comparative examples, but the present invention is not limited to the following examples. Raw materials used in the examples and comparative examples and measurement methods of physical property tests are as follows.

(Polyamide resin (A))

(A-1) Polyamide resin: polyamide 66 (Production Example 1) having a melting point of 265°C.
(A-2) Polyamide resin: polyamide 66, 1200-321 (trade name), manufactured by ASAHI KASEI CORPORATION, and having a melting point of 265°C.
(A-3) Polyamide resin: polyamide 66, 1500-X31 (trade name), manufactured by ASAHI KASEI CORPORATION, and having a melting point of 265°C
(A-4) Polyamide resin: Stanyl TW341-J, manufactured by DSM Japan K.K., and having a melting point of 295°C.
(A-5) Polyamide resin: SF1013A, manufactured by UBE Corporation, and having a melting point of 223°C
(A-6) Polyamide resin: crystalline semi-aromatic polyamide resin (Production Example 4), and having a melting point of 336°C

(Polyolefin-based graft copolymer (B) having an aromatic-ring-containing polymer in a side chain)

(B-1): MODIPER-A1100, manufactured by NOF CORPORATION, polyethylene-polystyrene-based graft copolymer
(B-2): MODIPER-A1401, manufactured by NOF CORPORATION, polyethylene-polystyrene-vinyl-based graft copolymer

(Compatibilizing agent (C))

(C1-1) APOLHYA LP91: manufactured by ARKEMA, polyolefin-polyamide-based polymer
(C1-2) Graft copolymer: polystyrene-polyamide-based polymer (Production Example 3)
(C2-1) FUSABOND N525: manufactured by manufactured by Dow Chemical Company, maleic anhydride-modified polyolefin-based polymer
(C2-2) FUSABOND MN493D: manufactured by Dow Chemical Company, maleic anhydride-modified polyolefin-based polymer
(C2-3) FUSABOND N416: manufactured by Dow Chemical Company, maleic anhydride-modified polyolefin-based polymer
(C2-4) TUFTEC M1943: manufactured by ASAHI KASEI CORPORATION, styrene-based thermoplastic elastomer
(C3-1) XIBOND 180: manufactured by Polyscope, styrene-maleic anhydride-based copolymer
(C3-2) XIBOND 120: manufactured by Polyscope, styrene-maleic anhydride-based copolymer
(C3-3) XIBOND 280: manufactured by Polyscope, styrene-maleic anhydride-based copolymer
(C3-4) Maleic anhydride-modified polyphenylene ether (m-PPE) (manufactured by ASAHI KASEI CORPORATION) (molecular weight: 54000)

((D) Polyolefin-based copolymer)

(D-1) ENGAGE 8180: manufactured by Dow Chemical Japan Ltd., ethylene-octene copolymer

·Copper iodide: copper (I) iodide, manufactured by Wako Pure Chemical Corporation
·Potassium iodide: potassium iodide, manufactured by Wako Pure Chemical Corporation
·Hindered phenol-based thermal stabilizer: manufactured by BASF, IRGANOX 1098
·Spreading agent: manufactured by SANYO CHEMICAL INDUSTRIES, LTD., PEG 400
·Azine-based dye: nigrosine, manufactured by ORIENT CHEMICAL INDUSTRIES CO., LTD., NUBIAN (registered trademark) BLACK TH-807

(Production Example 1) Preparation of polyamide 66 (polyamide resin (A-1))

15,000 g of equimolar salt of adipic acid and hexamethylene diamine, and adipic acid in an excess amount by 0.5% relative to the total amount of the equimolar salt component were dissolved in 15,000 g of distilled water to obtain an aqueous solution containing 50% by mass of the raw material monomers. The obtained aqueous solution was placed in an autoclave having an internal volume of 40 L, and the inside of the autoclave was purged with nitrogen. The aqueous solution was stirred at a temperature of 110°C to 150°C, and water vapor was gradually removed to concentrate the solution to a concentration of 70% by mass. Thereafter, the internal temperature was raised to 220°C. At this time, the autoclave was pressurized to 1.8 MPa. The reaction was continued for one hour while gradually removing water vapor and maintaining the pressure at 1.8 MPa until the internal temperature reached 270°C.

Thereafter, the pressure was reduced to atmospheric pressure over about one hour, and after reaching atmospheric pressure, the resultant was discharged in the form of a strand from a lower nozzle, and then subjected to water-cooling and cutting to obtain pellets. The obtained pellets were dried at 90°C for four hours in a nitrogen stream.

The obtained pellets had a relative viscosity in 98% sulfuric acid (measured by the method shown in JIS-K6920) of 2.71, a melting point (determined by differential scanning calorimetry (DSC) in accordance with JIS K7121) of 265°C, and a crystallization temperature (determined by differential scanning calorimetry (DSC) in accordance with JIS K7121) of 220°C.

(Production Example 2) Preparation of masterbatch

1.5 parts by mass of copper iodide and 32.5 parts by mass of an aqueous solution containing 40% by mass of potassium iodide were added to 100 parts by mass of the polyamide resin (A-1) obtained in (Production Example 1). The obtained mixture was melt-kneaded using a twin-screw extruder (manufactured by Research Laboratory of Plastics Technology Co., Ltd., a biaxial and unidirectional screw-rotary type, L/D=60 (D=30φ)) at a screw rotation number of 100 rpm and a cylinder temperature of 280°C to obtain a masterbatch containing the polyamide resin (A-1), copper iodide and potassium iodide.

(Production Example 3) Polystyrene-polyamide-based polymer

Ten parts by mass of the compatibilizing agent (C3-1) was added to 90 parts by mass of the polyamide resin (A-1), and then melt-kneaded using a twin-screw extruder (manufactured by Research Laboratory of Plastics Technology Co., Ltd., a biaxial and unidirectional screw-rotary type, L/D=60 (D=30φ)) at a screw rotation number of 300 rpm and a cylinder temperature of 280°C to obtain a polystyrene-polyamide-based polymer formed by reacting the polyamide resin (A-1) and 10% by mass of the compatibilizing agent (C3-1).

(Production Example 4) Crystalline semi-aromatic polyamide resin (polyamide resin (A-6))

A 50-liter rotary dryer was loaded with 15 kg of a polyamide 4T/polyamide 6T salt (39/61 mol/mol). A step of evacuating the rotary dryer to 50 mbar and then filling it with nitrogen was repeated five times. The polyamide 4T/polyamide 6T salt was heated to a temperature of 220°C over five hours while discharging the reaction water from the rotary dryer, followed by heating the resultant to 255°C over 15 hours. A low nitrogen purge was used during the reaction. After cooling the resultant to 235°C over 19 hours, a mixture composed of 650 kg of 1,6-hexamethylene diamine, 300 g of 1,4-butanediamine and 1.0 kg of water was added thereto over seven hours, while maintaining the temperature at 235°C. The reaction was further continued at 235°C for 29 hours, followed by increasing the nitrogen flow and cooling the resultant to room temperature. A white powder was obtained.

[Molding method]

A multi-purpose test piece type A was molded in accordance with ISO 3167 using pellets of each polyamide resin composition obtained in Examples and Comparative Examples with an injection molding machine NEX50IV-5EG (manufactured by NISSEI PLASTIC INDUSTRIAL CO., LTD., having a screw diameter of 26 mm and an injection volume of 49 cm$^3$) in which an injection and pressure-maintaining time was set at 25 seconds, a cooling time was set at 15 seconds, a mold temperature was set at 80°C, and a cylinder temperature was set at a temperature higher by 30°C than the melting point of the polyamide resin.

[Measurement method]

Sliding properties, mechanical properties, moldability, and long-term heat resistance were measured and evaluated by the methods described below.

[Evaluation of sliding properties]

(Friction coefficient and wear depth)

A slide test was conducted using a reciprocating friction and wear tester (manufactured by TOYO PRECISION PARTS MFG. CO., LTD., under a model number of AFT-15MS) and a SUS304 test piece (ball having a diameter of 5 mm) as a joining material, under conditions in which the linear velocity was 50 mm/sec, the reciprocating distance was 20 mm, the temperature was 23°C, and the humidity was 50%.
Furthermore, a friction coefficient test was conducted under conditions in which the load was 4 kg and the number of reciprocations was 10,000 times.
In addition, the maximum wear depth of wear marks on the sample after the slide test was measured using a surface roughness meter (manufactured by TOYO PRECISION PARTS MFG. CO., LTD., under a model number of 575A-30).
As an evaluation sample, a multi-purpose test piece type A was molded in accordance with ISO 3167 under the conditions of Samples 1 to 3 described below. Since the conditions of samples 1 to 3 differed greatly in terms of the injection speed, the flow rate (shear rate) of the melted resin also differed greatly, and a large change in the morphological state of the polyolefin-based resin was confirmed. Sample conditions to evaluate a wide range of shear rates during processing were determined.
Sample 1: The same procedure as in the above-mentioned [molding method] was carried out except that the injection speed was 5 mm/s.
Sample 2: The same procedure as in the above-mentioned [molding method] was carried out except that the injection speed was 30 mm/s.
Sample 3: The same procedure as in the above-mentioned [molding method] was carried out except that the injection speed was 100 mm/s.

[Evaluation of mechanical properties]

(Tensile test)

A tensile test was carried out using the test piece type A molded from each composition obtained in Examples and Comparative Examples under the conditions shown in the [Molding method] at a test speed of 50 mm/min in accordance with ISO 527 to measure the tensile strength (MPa).
Moreover, the ratio of the displacement amount of the distance between chucks at the time of fracture to the distance between chucks before the test was determined as the tensile elongation (%).

Tensile elongation (%) = 100 $\times$ displacement amount (mm) at fracture point / initial distance (mm) between chucks

Furthermore, the value obtained by dividing the tensile strength by the tensile elongation was determined as the tensile modulus of elasticity (MPa).

$$\text{Tensile modulus of elasticity (MPa)} = \text{tensile strength (MPa)} / \text{tensile elongation}$$

(Charpy impact strength)

A test piece type A molded from each composition obtained in Examples and Comparative Examples under the conditions shown in the [Molding method] was processed into a size of 80 mm $\times$ 10 mm $\times$ 4 mm to measure the notched Charpy impact strength (kJ/m$^2$) in accordance with ISO179.

(Deflection temperature (°C) under load)

A test piece type A molded from each composition obtained in Examples and Comparative Examples under the conditions shown in the [Molding method] was processed into a size of 80 mm $\times$ 10 mm $\times$ 4 mm to measure the deflection temperature (°C) under load in accordance with the method B (in which the bending stress was 0.45 MPa) in accordance with ISO75 (JIS K7191).

(Tensile strength and heat aging resistance)

Each multipurpose test piece (type A) was placed in an oven compliant with ISO188 and heated at 150°C for 1500 hours to carry out a heat aging resistance test. After 1500 hours, each multi-purpose test piece (type A) was taken out of the oven and cooled at 23°C for 24 hours. Next, each multi-purpose test piece (type A) after the heat aging resistance test was subjected to a tensile test at a tensile rate of 50 mm/min in accordance with ISO 527 to measure the tensile strength (MPa) after the heat aging resistance test. Next, the tensile strength retention rate (%) was calculated using the formula shown below.

"Tensile strength retention rate (%)" = (tensile strength (MPa) after heat aging resistance test) / (tensile strength (MPa) before heat aging resistance test (MPa)) $\times$ 100

[Evaluation of moldability]

Molding was carried out continuously under the molding conditions described in the [Molding method]. Then, the number of continuous molding cycles was evaluated by a scale of one-point to five-point based on Table 1 shown below. In this evaluation, a five-point was evaluated as the best result, and a one-point was evaluated as the worst result among the five points

[Table 1]

| Evaluation of moldability | 5 | 4 | 3 | 2 | 1 |
|---|---|---|---|---|---|
| Number of continuous molding cycles | >30 | 30 to 25 | 25 to 20 | 20 to 10 | 10 to 0 |

(Example 1)

The polyamide resin (A-1), the polyolefin-based graft copolymer (B-1), and the compatibilizing agent (C1-1) were mixed in amounts mentioned in the following Table 2, and supplied from the most upstream supply port of a twin-screw extruder (manufactured by Coperion, under the trade name of "ZSK26MC18") having a screw diameter of 26 mm. Next, the barrel temperature of the extruder was set to a temperature higher by 30°C than the melting point of the polyamide resin, and extrusion was carried out while conducting melt-kneading at a screw rotation number of 300 rpm to obtain pellets of a polyamide resin composition.
Test pieces were prepared by the method described in the [Molding method] using the obtained pellets of the polyamide resin composition, and evaluated by each method described in the [Measurement method].

(Examples 2 to 5)

Pellets of each polyamide resin composition were obtained and evaluated in the same manner as in Example 1, except that the amount of the compatibilizing agent (C1-1) was increased as shown in the following Table 2.

(Example 6)

Pellets of a polyamide resin composition were obtained and evaluated in the same manner as in Example 5, except that the amount of the polyolefin-based graft copolymer (B-1) was increased as shown in the following Table 2.

(Example 7)

Pellets of a polyamide resin composition were obtained and evaluated in the same manner as in Example 6, except that the amount of the compatibilizing agent (C1-1) was increased as shown in the following Table 3.

(Example 8)

Pellets of a polyamide resin composition were obtained and evaluated in the same manner as in Example 1, except that the amount of the polyolefin-based graft copolymer (B-1) or the compatibilizing agent (C1-1) was increased or decreased as shown in the following Table 3.

(Example 9)

Pellets of a polyamide resin composition were obtained and evaluated in the same manner as in Example 4, except that the polyolefin-based graft copolymer (B-2) was blended instead of the polyolefin-based graft copolymer (B-1).

(Example 10)

Pellets of a polyamide resin composition were obtained and evaluated in the same manner as in Example 4, except that the compatibilizing agent (C1-2) was blended instead of the compatibilizing agent (C1-1).

(Examples 11 to 14)

Pellets of each polyamide resin composition were obtained and evaluated in the same manner as in Example 4, except that each of the polyamide resins (A-2) to (A-5) was blended instead of the polyamide resin (A-1) as shown in the following Table 3 or 4.

(Examples 15 to 17)

Pellets of each polyamide resin composition were obtained and evaluated in the same manner as in Example 3, except that each of the compatibilizing agents (C2-1) to (C2-3) was blended instead of the compatibilizing agent (C1-1) as shown in the following
Table 4.

(Example 18)

Pellets of a polyamide resin composition were obtained and evaluated in the same manner as in Example 3, except that the compatibilizing agent (C2-4) was blended instead of the compatibilizing agent (C1-1) and the amount of the compatibilizing agent (C2-4) was increased as shown in the following Table 4.

(Example 19)

Pellets of a polyamide resin composition were obtained and evaluated in the same manner as in Example 1, except that the compatibilizing agent (C2-2) was blended instead of the compatibilizing agent (C1-1) as shown in the following Table 5.

(Example 20)

Pellets of a polyamide resin composition were obtained and evaluated in the same manner as in Example 1, except that the compatibilizing agent (C3-1) was blended instead of the compatibilizing agent (C1-1) and the amount of the compatibilizing agent (C3-1) was increased as shown in the following Table 5.

(Example 21)

Pellets of a polyamide resin composition were obtained and evaluated in the same manner as in Example 1, except that the compatibilizing agent (C3-2) was blended instead of the compatibilizing agent (C1-1) and the amount of the compatibilizing agent (C3-2) was increased as shown in the following Table 5.

(Example 22)

Pellets of a polyamide resin composition were obtained and evaluated in the same manner as in Example 1, except that the compatibilizing agent (C3-3) was blended instead of the compatibilizing agent (C1-1) and the amount of the compatibilizing agent (C3-3) was increased as shown in the following Table 5.

(Example 23)

Pellets of a polyamide resin composition were obtained and evaluated in the same manner as in Example 1, except that the compatibilizing agent (C3-4) was blended instead of the compatibilizing agent (C1-1) and the amount of the compatibilizing agent (C3-4) was increased as shown in the following Table 5.

(Example 24)

Pellets of a polyamide resin composition were obtained and evaluated in the same manner as in Example 4, except that 2 parts by mass of the masterbatch obtained in Production Example 2 was blended as copper iodide and potassium iodide with the polyamide resin (A-1), the polyolefin-based graft copolymer (B-1) and the compatibilizing agent (C1-1). The total amount of the polyamide resin (A-1) in the pellets contained the amount of the polyamide resin (A-1) in the masterbatch, and was defined as 100 parts by mass.

(Example 25)

Pellets of a polyamide resin composition were obtained and evaluated in the same manner as in Example 4, except that 0.03 parts by mass of copper iodide, 0.26 parts by mass of potassium iodide, 0.03 parts by mass of the hindered phenol-based thermal stabilizer and 0.03 parts by mass of the spreading agent were blended in addition to the polyamide resin (A-1), the polyolefin-based graft copolymer (B-1) and the compatibilizing agent (C1-1).

(Example 26)

Pellets of a polyamide resin composition were obtained and evaluated in the same manner as in Example 4, except that 40 parts by mass of the polyamide resin (A-6) was blended in addition to the polyamide resin (A-1), the polyolefin-based graft copolymer (B-1) and the compatibilizing agent (C1-1), the barrel temperature of an extruder was set at a temperature of the melting point of the polyamide resin (A-6), the mold temperature of an injection molding machine was set at 120°C, and the cylinder temperature was set at a temperature of the melting point of the polyamide resin (A-6).

(Example 27)

Pellets of a polyamide resin composition were obtained and evaluated in the same manner as in Example 4, except that 5 parts by mass of the polyamide resin (A-5) was blended in addition to the polyamide resin (A-1), the polyolefin-based graft copolymer (B-1) and the compatibilizing agent (C1-1).

(Comparative Examples 1 and 2)

Pellets of each polyamide resin composition were obtained and evaluated in the same manner as in Example 1, except that the compatibilizing agent (C) was not blended, and the polyolefin-based graft copolymer (B-1) was blended as shown in the following Table 6.

(Comparative Example 3)

Pellets of a polyamide resin composition were obtained and evaluated in the same manner as in Example 1, except that the polyolefin-based graft copolymer (B) was not blended, and the compatibilizing agent (C1-1) was blended as shown in the following
Table 7.

(Comparative Example 4)

Pellets of a polyamide resin composition were obtained and evaluated in the same manner as in Example 4, except that the polyolefin-based copolymer (D-1) was blended instead of the polyolefin-based graft copolymer (B) as shown in the following Table 7.

(Comparative Example 5)

Pellets of a polyamide resin composition were obtained and evaluated in the same manner as in Comparative Example 3, except that the compatibilizing agent (C3-2) was blended instead of the compatibilizing agent (C1-1) and the amount of the compatibilizing agent (C3-2) was decreased as shown in the following Table 7.

(Comparative Example 6)

Pellets of a polyamide resin composition were obtained and evaluated in the same manner as in Comparative Example 3, except that the compatibilizing agent (C2-4) was blended instead of the compatibilizing agent (C1-1) and the polyolefin-based copolymer (D-1) was further blended as shown in the following Table 7.

(Comparative Example 7)

Pellets of a polyamide resin composition were obtained and evaluated in the same manner as in Comparative Example 3, except that the compatibilizing agent (C2-2) was blended instead of the compatibilizing agent (C1-1).

[Table 2]

| Constitution | | | Example | | | | | |
|---|---|---|---|---|---|---|---|---|
| | | | 1 | 2 | 3 | 4 | 5 | 6 |
| Polyamide resin (A) | Type | | (A-1) | (A-1) | (A-1) | (A-1) | (A-1) | (A-1) |
| | Parts by mass | | 100 | 100 | 100 | 100 | 100 | 100 |
| Polyolefin-based graft copolymer (B) | Type | | (B-1) | (B-1) | (B-1) | (B-1) | (B-1) | (B-1) |
| | Parts by mass | | 5.0 | 5.0 | 5.0 | 5.0 | 5.0 | 10.0 |
| Compatibilizing agent (C) | Type | | (C1-1) | (C1-1) | (C1-1) | (C1-1) | (C1-1) | (C1-1) |
| | Parts by mass | | 0.3 | 1.0 | 1.5 | 2.0 | 5.0 | 5.0 |
| Polyolefin-based copolymer (D) | Type | | | | | | | |
| | Parts by mass | | | | | | | |
| (C)/(B) | Mass ratio | | 0.04 | 0.14 | 0.21 | 0.28 | 0.70 | 0.35 |
| Total | Parts by mass | | 105.3 | 106.0 | 106.5 | 107.0 | 110.0 | 115.0 |
| Physical properties | | | 1 | 2 | 3 | 4 | 5 | 6 |
| Mechanical properties | Tensile strength | | 84 | 83 | 82 | 81 | 80 | 77 |
| | Modulus of elasticity | | 3.0 | 3.0 | 3.0 | 2.9 | 2.8 | 2.7 |
| | Charpy impact strength | | 6.5 | 8.2 | 8.2 | 9.1 | 11.0 | 11.0 |
| | Deflection temperature under load (°C) Bending stress was 0.45MPa. | | 210 | 213 | 214 | 216 | 216 | 216 |
| Moldability | Number of continuous cycles | | 5 | 5 | 5 | 5 | 5 | 5 |
| Long-term heat resistance 1500h | 150°C/ Tensile strength retention rate (%) | | 90 | 91 | 98 | 100 | 100 | 90 |

(continued)

| Constitution | | | Example | | | | | |
|---|---|---|---|---|---|---|---|---|
| | | | 1 | 2 | 3 | 4 | 5 | 6 |
| Sliding properties | Sample 1 | Friction coefficient | 0.13 | 0.12 | 0.12 | 0.12 | 0.13 | 0.13 |
| | | Wear depth (μm) | 14 | 13 | 12 | 12 | 15 | 19 |
| | Sample 2 | Friction coefficient | 0.13 | 0.13 | 0.12 | 0.12 | 0.13 | 0.13 |
| | | Wear depth (μm) | 15 | 13 | 12 | 12 | 16 | 25 |
| | Sample 3 | Friction coefficient | 0.13 | 0.13 | 0.12 | 0.12 | 0.13 | 0.14 |
| | | Wear depth (μm) | 17 | 14 | 12 | 12 | 18 | 29 |

[Table 3]

| Constitution | | | Example | | | | | |
|---|---|---|---|---|---|---|---|---|
| | | | 7 | 8 | 9 | 10 | 11 | 12 |
| Polyamide resin (A) | | Type | (A-1) | (A-1) | (A-1) | (A-1) | (A-2) | (A-3) |
| | | Parts by mass | 100 | 100 | 100 | 100 | 100 | 100 |
| Polyolefin-based graft copolymer (B) | | Type | (B-1) | (B-1) | (B-2) | (B-1) | (B-1) | (B-1) |
| | | Parts by mass | 10.0 | 3.0 | 5.0 | 5.0 | 5.0 | 5.0 |
| Compatibilizing agent (C) | | Type | (C1-1) | (C1-1) | (C1-1) | (C1-2) | (C1-1) | (C1-1) |
| | | Parts by mass | 10.0 | 2.0 | 2.0 | 2.0 | 2.0 | 2.0 |
| Polyolefin-based copolymer (D) | | Type | | | | | | |
| | | Parts by mass | | | | | | |
| (C)/(B) | | Mass ratio | 0.70 | 0.47 | 0.28 | 0.28 | 0.28 | 0.28 |
| Total | | Parts by mass | 120.0 | 105.0 | 107.0 | 107.0 | 107.0 | 107.0 |
| Physical properties | | | 7 | 8 | 9 | 10 | 11 | 12 |
| Mechanical properties | | Tensile strength | 69 | 85 | 81 | 81 | 83 | 81 |
| | | Modulus of elasticity | 2.5 | 3.0 | 2.9 | 2.9 | 2.9 | 2.9 |
| | | Charpy impact strength | 13.0 | 8.6 | 9.0 | 9.1 | 9.1 | 9.2 |
| | | Deflection temperature under load (°C) Bending stress was 0.45MPa. | 216 | 220 | 215 | 216 | 208 | 223 |
| Moldability | | Number of continuous cycles | 5 | 5 | 5 | 5 | 5 | 5 |
| Long-term heat resistance 1500h | | 150°C/ Tensile strength retention rate (%) | 80 | 100 | 100 | 100 | 98 | 100 |

(continued)

| Constitution | | | Example | | | | | |
|---|---|---|---|---|---|---|---|---|
| | | | 7 | 8 | 9 | 10 | 11 | 12 |
| Sliding properties | Sample 1 | Friction coefficient | 0.13 | 0.12 | 0.12 | 0.12 | 0.12 | 0.12 |
| | | Wear depth (μm) | 22 | 12 | 12 | 12 | 12 | 12 |
| | Sample 2 | Friction coefficient | 0.16 | 0.12 | 0.12 | 0.12 | 0.12 | 0.12 |
| | | Wear depth (μm) | 27 | 12 | 12 | 12 | 13 | 12 |
| | Sample 3 | Friction coefficient | 0.20 | 0.13 | 0.13 | 0.12 | 0.12 | 0.12 |
| | | Wear depth (μm) | 32 | 12 | 13 | 12 | 13 | 12 |

[Table 4]

| Constitution | | | Example | | | | | |
|---|---|---|---|---|---|---|---|---|
| | | | 13 | 14 | 15 | 16 | 17 | 18 |
| Polyamide resin (A) | Type | | (A-4) | (A-5) | (A-1) | (A-1) | (A-1) | (A-1) |
| | Parts by mass | | 100 | 100 | 100 | 100 | 100 | 100 |
| Polyolefin-based graft copolymer (B) | Type | | (B-1) | (B-1) | (B-2) | (B-1) | (B-1) | (B-1) |
| | Parts by mass | | 5.0 | 5.0 | 5.0 | 5.0 | 5.0 | 5.0 |
| Compatibilizing agent (C) | Type | | (C1-1) | (C1-1) | (C1-1) | (C1-2) | (C1-1) | (C1-1) |
| | Parts by mass | | 2.0 | 2.0 | 1.5 | 1.5 | 1.5 | 1.8 |
| Polyolefin-based copolymer (D) | Type | | | | | | | |
| | Parts by mass | | | | | | | |
| (C)/(B) | Mass ratio | | 0.28 | 0.28 | 0.30 | 0.30 | 0.30 | 0.36 |
| Total | Parts by mass | | 107.0 | 107.0 | 106.5 | 106.5 | 106.5 | 106.8 |
| Physical properties | | | 13 | 14 | 15 | 16 | 17 | 18 |
| Mechanical properties | Tensile strength | | 90 | 70 | 80 | 79 | 80 | 80 |
| | Modulus of elasticity | | 3.2 | 2.4 | 2.9 | 2.9 | 3.0 | 2.9 |
| | Charpy impact strength | | 10.0 | 8.5 | 8.3 | 8.3 | 8.3 | 8.4 |
| | Deflection temperature under load (°C) Bending stress was 0.45MPa. | | 254 | 152 | 209 | 207 | 211 | 211 |
| Moldability | Number of continuous cycles | | 5 | 5 | 5 | 5 | 5 | 5 |
| Long-term heat resistance 1500h | 150°C/ Tensile strength retention rate (%) | | 100 | 75 | 87 | 85 | 87 | 89 |

(continued)

| Constitution | | | Example | | | | | |
|---|---|---|---|---|---|---|---|---|
| | | | 13 | 14 | 15 | 16 | 17 | 18 |
| Sliding properties | Sample 1 | Friction coefficient | 0.12 | 0.12 | 0.13 | 0.13 | 0.13 | 0.13 |
| | | Wear depth (μm) | 18 | 22 | 16 | 19 | 18 | 19 |
| | Sample 2 | Friction coefficient | 0.13 | 0.13 | 0.13 | 0.13 | 0.13 | 0.14 |
| | | Wear depth (μm) | 19 | 25 | 23 | 24 | 19 | 25 |
| | Sample 3 | Friction coefficient | 0.14 | 0.14 | 0.14 | 0.14 | 0.13 | 0.14 |
| | | Wear depth (μm) | 23 | 30 | 30 | 34 | 25 | 39 |

[Table 5]

| Constitution | | | Example | | | | | |
|---|---|---|---|---|---|---|---|---|
| | | | 19 | 20 | 21 | 22 | 23 | 24 |
| Polyamide resin (A) | | Type | (A-1) | (A-1) | (A-1) | (A-1) | (A-1) | (A-1) |
| | | Parts by mass | 100 | 100 | 100 | 100 | 100 | 100 |
| Polyolefin-based graft copolymer (B) | | Type | (B-1) | (B-1) | (B-1) | (B-1) | (B-1) | (B-1) |
| | | Parts by mass | 5.0 | 5.0 | 5.0 | 5.0 | 5.0 | 5.0 |
| Compatibilizing agent (C) | | Type | (C2-2) | (C3-1) | (C3-2) | (C3-3) | (C3-4) | (C1-1) |
| | | Parts by mass | 0.3 | 0.6 | 0.9 | 1.2 | 0.6 | 2.0 |
| Polyolefin-based copolymer (D) | | Type | | | | | | |
| | | Parts by mass | | | | | | |
| (C)/(B) | | Mass ratio | 0.06 | 0.12 | 0.18 | 0.24 | 0.12 | 0.40 |
| Total | | Parts by mass | 105.3 | 105.6 | 105.9 | 106.2 | 105.6 | 107.0 |
| Physical properties | | | 19 | 20 | 21 | 22 | 23 | 24 |
| Mechanical properties | | Tensile strength | 84 | 81 | 83 | 85 | 84 | 81 |
| | | Modulus of elasticity | 3.0 | 3.0 | 3.0 | 3.1 | 3.0 | 2.9 |
| | | Charpy impact strength | 6.6 | 5.8 | 5.2 | 4.6 | 6.4 | 9.1 |
| | | Deflection temperature under load (°C) Bending stress was 0.45MPa. | 195 | 214 | 217 | 224 | 220 | 216 |
| Moldability | | Number of continuous cycles | 5 | 5 | 5 | 5 | 5 | 5 |
| Long-term heat resistance 1500h | | 150°C/ Tensile strength retention rate (%) | 79 | 83 | 91 | 92 | 80 | 100 |

**EP 4 502 066 A1**

(continued)

| Sliding properties | | | Example | | | | | |
|---|---|---|---|---|---|---|---|---|
| Sample 1 | Friction coefficient | 0.13 | 0.12 | 0.12 | 0.12 | 0.12 | 0.12 |
| | Wear depth (μm) | 19 | 16 | 16 | 16 | 20 | 12 |
| Sample 2 | Friction coefficient | 0.13 | 0.12 | 0.12 | 0.12 | 0.13 | 0.12 |
| | Wear depth (μm) | 25 | 24 | 20 | 20 | 30 | 12 |
| Sample 3 | Friction coefficient | 0.14 | 0.12 | 0.12 | 0.12 | 0.14 | 0.12 |
| | Wear depth (μm) | 38 | 45 | 24 | 24 | 41 | 12 |

[Table 6]

| | | | Example | | | Comparative Example | |
|---|---|---|---|---|---|---|---|
| Constitution | | | 25 | 26 | 27 | 1 | 2 |
| Polyamide resin (A) | Type | | (A-1) | (A-1) | (A-1) | (A-1) | (A-1) |
| | Parts by mass | | 100 | 100 | 100 | 100 | 100 |
| | Type | | | (A-6) | (A-6) | | |
| | Parts by mass | | | 40 | 5 | | |
| Polyolefin-based graft copolymer (B) | Type | | (B-1) | (B-1) | (B-1) | (B-1) | (B-1) |
| | Parts by mass | | 5.0 | 5.0 | 5.0 | 5.0 | 30.0 |
| Compatibilizing agent (C) | Type | | (C1-1) | (C1-1) | (C1-1) | | |
| | Parts by mass | | 2.0 | 2.0 | 2.0 | | |
| Polyolefin-based copolymer (D) | Type | | | | | | |
| | Parts by mass | | | | | | |
| (C)/(B) | | Mass ratio | 0.40 | 0.40 | 0.40 | | |
| Total | | Parts by mass | 107.0 | 107.0 | 107.0 | 105.0 | 130.0 |
| Physical properties | | | 25 | 26 | 27 | 1 | 2 |
| Mechanical properties | Tensile strength | | 81 | 85 | 81 | 81 | 53 |
| | Modulus of elasticity | | 2.9 | 3.2 | 2.9 | 2.8 | 1.8 |
| | Charpy impact strength | | 9.1 | 8.8 | 8.9 | 6.2 | 5.5 |
| | Deflection temperature under load (°C) Bending stress was 0.45MPa. | | 216 | 260 | 210 | 181 | 160 |
| Moldability | Number of continuous cycles | | 5 | 5 | 5 | 2 | 1 |
| Long-term heat resistance 1500h | 150°C/ Tensile strength retention rate (%) | | 100 | 100 | 90 | 49 | 20 |

(continued)

| Sliding properties | Sample 1 | Friction coefficient | 0.12 | 0.13 | 0.12 | 0.15 | 0.21 |
| | | Wear depth ($\mu$m) | 12 | 12 | 12 | 28.0 | 161.0 |
| | Sample 2 | Friction coefficient | 0.12 | 0.13 | 0.12 | 0.17 | 0.28 |
| | | Wear depth ($\mu$m) | 12 | 12 | 12 | 49.0 | 289.0 |
| | Sample 3 | Friction coefficient | 0.12 | 0.14 | 0.13 | 0.19 | 0.31 |
| | | Wear depth ($\mu$m) | 12 | 13 | 15 | 108.0 | 337.0 |

[Table 7]

| | | | Comparative Example | | | | |
|---|---|---|---|---|---|---|---|
| Constitution | | | 3 | 4 | 5 | 6 | 7 |
| Polyamide resin (A) | | Type | (A-1) | (A-1) | (A-1) | (A-1) | (A-1) |
| | | Parts by mass | 100 | 100 | 100 | 100 | 100 |
| Polyolefin-based graft copolymer (B) | | Type | | | | | |
| | | Parts by mass | | | | | |
| Compatibilizing agent (C) | | Type | (C1-1) | (C1-1) | (C3-2) | (C2-4) | (C2-2) |
| | | Parts by mass | 5.0 | 2.0 | 2.0 | 5.0 | 5.0 |
| Polyolefin-based copolymer (D) | | Type | | (D-1) | | (D-1) | |
| | | Parts by mass | | 5 | | 2 | |
| (C)/(B) | | Mass ratio | | | | | |
| Total | | Parts by mass | 105.0 | 107.0 | 102.0 | 107.0 | 105.0 |
| Physical properties | | | 3 | 4 | 5 | 6 | 7 |
| Mechanical properties | | Tensile strength | 82 | 75 | 90 | 80 | 83 |
| | | Modulus of elasticity | 2.9 | 2.7 | 3.3 | 2.8 | 2.9 |
| | | Charpy impact strength | 8.7 | 9.2 | 2.5 | 10.0 | 9.0 |
| | | Deflection temperature under load (°C) Bending stress was 0.45MPa. | 225 | 206 | 228 | 202 | 205 |
| Moldability | | Number of continuous cycles | 5 | 5 | 5 | 5 | 5 |
| Long-term heat resistance 1500h | | 150°C/ Tensile strength retention rate (%) | 100 | 70 | 80 | 45 | 60 |
| Sliding properties | Sample 1 | Friction coefficient | 0.26 | 0.14 | 1.00 | 0.30 | 0.25 |
| | | Wear depth ($\mu$m) | 170 | 38 | 500.0 | 150 | 118 |
| | Sample 2 | Friction coefficient | 0.30 | 0.21 | 1.00 | 0.32 | 0.27 |
| | | Wear depth ($\mu$m) | 176 | 66 | 500.0 | 178 | 122 |
| | Sample 3 | Friction coefficient | 0.36 | 0.25 | 1.00 | 0.30 | 0.26 |
| | | Wear depth ($\mu$m) | 192 | 105 | 500.0 | 172 | 140 |

From the results of the examples, all of the sliding properties (friction coefficient and wear depth), moldability, long-term heat resistance and mechanical properties (tensile strength, modulus of elasticity, impact resistance, and heat resistance) of the polyamide resin compositions according to the present invention were excellent. Among them, it was clearly confirmed from the comparison with the comparative examples that the combination of both of the component (B)

**EP 4 502 066 A1**

and the component (C) resulted in excellent sliding properties in all evaluation samples 1 to 3, particularly. It was evaluated from the results that a polyamide resin composition stably having excellent sliding properties was obtained without depending on the injection speed (shear rate applied to the melted resin). Furthermore, it was confirmed from the results of Examples 11 to 14 that the combination of the component (B) and the component (C) made all of sliding properties (friction coefficient and wear depth), moldability, long-term heat resistance, and mechanical properties (tensile strength, modulus of elasticity, impact resistance, and heat resistance) excellent without being limited by the type of the polyamide resin (A).

In contrast, it was confirmed from the results of the comparative examples that although some properties of the polyamide resin compositions obtained in the comparative examples were excellent, the balance among the sliding properties, long-term heat resistance, moldability, and mechanical properties was deteriorated. Among them, the sliding properties were significantly deteriorated especially compared to the examples, and the sliding properties varied significantly depending on the sample conditions. Furthermore, in Comparative Examples 1 and 2 in which the component (C) was not blended, all properties were deteriorated, and the melted resin leaked from the nozzle tip of the injection molding machine during injection molding, thereby making the continuous injection molding difficult, and deteriorating the industrial applicability from the viewpoint of moldability. Furthermore, in Comparative Examples 3 to 7 in which the component (B) was not blended, the sliding properties were significantly deteriorated.

Industrial Applicability

Since the polyamide resin composition according to the present invention has excellent sliding properties and mechanical properties, it can be used in automobile fields, electrical and electronic fields, machinery and industrial fields, office equipment fields, aviation and space fields, or the like.

**Claims**

1.   A polyamide resin composition, comprising:

     a polyamide resin (A);
     a polyolefin-based graft copolymer (B) having an aromatic-ring-containing polymer in a side chain; and
     a compatibilizing agent (C).

2.   The polyamide resin composition according to claim 1, wherein the compatibilizing agent (C) comprises at least one selected from the group consisting of an olefin skeleton and an aromatic ring skeleton.

3.   The polyamide resin composition according to claim 1, wherein an amount of the polyolefin-based graft copolymer (B) having an aromatic-ring-containing polymer in a side chain is 1 part by mass to 15 parts by mass, and an amount of the compatibilizing agent (C) is 1 part by mass to 15 parts by mass, relative to 100 parts by mass of the polyamide resin (A).

4.   The polyamide resin composition according to claim 2, wherein the compatibilizing agent (C) comprises at least the olefin skeleton.

5.   The polyamide resin composition according to claim 4, wherein a mass ratio (C)/(B) of the compatibilizing agent (C) to the polyolefin-based graft copolymer (B) having an aromatic-ring-containing polymer in a side chain is 0.01 to 2.

6.   The polyamide resin composition according to claim 2, wherein the compatibilizing agent (C) comprises at least the aromatic ring skeleton.

7.   The polyamide resin composition according to claim 6, wherein a mass ratio (C)/(B) of the compatibilizing agent (C) to the polyolefin-based graft copolymer (B) having an aromatic-ring-containing polymer in a side chain is 0.001 to 1.

8.   The polyamide resin composition according to claim 6, wherein the compatibilizing agent (C) has at least a functional group reactive with the polyamide resin (A).

9.   The polyamide resin composition according to claim 8, wherein the reactive functional group comprises a structural unit derived from a carboxylic anhydride.

10.  The polyamide resin composition according to claim 1, wherein the compatibilizing agent (C) has an amide bond at least in a side chain.

11. The polyamide resin composition according to claim 1, wherein the polyolefin-based graft copolymer (B) having an aromatic-ring-containing polymer in a side chain has a polyethylene at least in a main chain.

12. The polyamide resin composition according to claim 3, further comprising: 0.01 parts by mass to 5 parts by mass of a copper compound; and 0.05 parts by mass to 5 parts by mass of a halide of a metal selected from the group consisting of alkali metals and alkaline earth metals, relative to 100 parts by mass of the polyamide resin (A).

13. A molded article formed by molding a polyamide resin composition of any one of claims 1 to 12.

14. A slide member made of a polyamide resin composition of any one of claims 1 to 12.

15. A method for producing a polyamide resin composition, comprising: melt-kneading a polyamide resin (A), a polyolefin-based graft copolymer (B) having an aromatic-ring-containing polymer in a side chain, and a compatibilizing agent (C).

16. The method for producing a polyamide resin composition according to claim 15, wherein the polyamide resin composition is a polyamide resin composition of any one of claims 1 to 12.

## INTERNATIONAL SEARCH REPORT

International application No.

**PCT/JP2023/011800**

### A. CLASSIFICATION OF SUBJECT MATTER

*C08L 77/00*(2006.01)i; *C08K 3/011*(2018.01)i; *C08K 3/105*(2018.01)i; *C08L 23/00*(2006.01)i; *C08L 25/04*(2006.01)i; *C08L 51/06*(2006.01)i

FI:   C08L77/00; C08L51/06; C08K3/105; C08K3/011; C08L23/00; C08L25/04

According to International Patent Classification (IPC) or to both national classification and IPC

### B. FIELDS SEARCHED

Minimum documentation searched (classification system followed by classification symbols)

C08L

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 3-31360 A (HOECHST CELANESE CORP) 12 February 1991 (1991-02-12) claims, p. 3, upper right column to lower left column, example 1 | 1-5, 7-9, 11, 13, 15, 16 |
| X | JP 8-48873 A (DAINIPPON INK & CHEM INC) 20 February 1996 (1996-02-20) claims, paragraphs [0027]-[0029], [0034], [0036], example 4 | 1-16 |
| Y | JP 10-114896 A (NTN CORP) 06 May 1998 (1998-05-06) claims, paragraph [0022], example 1 | 1-9, 11-16 |
| Y | JP 2016-117842 A (NOF CORP) 30 June 2016 (2016-06-30) claims, paragraph [0001], examples | 1-9, 11-16 |
| A | JP 2003-335940 A (OILES INDUSTRY CO LTD) 28 November 2003 (2003-11-28) entire text | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/011800**

| Patent document cited in search report | | | Publication date (day/month/year) | Patent family member(s) | Publication date (day/month/year) |
|---|---|---|---|---|---|
| JP | 3-31360 | A | 12 February 1991 | EP 400964 A2 claims, p. 3, lines 8-14, example 1 KR 10-1990-0018273 A | |
| JP | 8-48873 | A | 20 February 1996 | (Family: none) | |
| JP | 10-114896 | A | 06 May 1998 | US 6377770 B1 claims, column 3, lines 45-58, example 1 | |
| JP | 2016-117842 | A | 30 June 2016 | (Family: none) | |
| JP | 2003-335940 | A | 28 November 2003 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022048923 A
- JP 2022088612 A
- JP 2022167193 A
- JP 2016117842 A

- WO 2013047625 A
- JP 2011084679 A
- JP 2012102189 A